# EUROPÄISCHE PATENTSCHRIFT

(11) **EP 0 979 749 B1**
(45) Veröffentlichungstag und Bekanntmachung des Hinweises auf die Patenterteilung: **01.12.2004**
(21) Anmeldenummer: 99114710.9
(22) Anmeldetag: 28.07.1999
(51) Int. Cl.: B60N 2/04, B60N 2/02, B60N 2/16

(54) **Motorisch verstellbarer Fahrzeugsitz mit einstellbarem Sitz, insbesondere höhenverstellbarer Sitzfläche**
Powered vehicle seat with adjustable seat particularly with height adjustable seat portion
Siège de véhicule réglable par moteur avec siège réglable en particulier avec assise réglable en hauteur

(30) Priorität: 12.08.1998 DE 29814448 U
(43) Veröffentlichungstag der Anmeldung: 16.02.2000
(73) Patentinhaber: C. Rob. Hammerstein GmbH & Co.KG, 42699 Solingen (DE)
(72) Erfinder: Frohnhaus, Ernst-Reiner, 42653 Solingen (DE); Becker, Burckhard, 42655 Solingen (DE); Beneker, Wilfried, Dr., 42799 Leichlingen (DE)
(74) Vertreter: Bauer, Wulf, Dr.

(56) Entgegenhaltungen:
- EP-A- 0 589 421
- DE-A- 3 443 517
- US-A- 4 366 983
- US-A- 4 787 594
- PATENT ABSTRACTS OF JAPAN vol. 1996, no. 12, 26. Dezember 1996 (1996-12-26) -& JP 08 207628 A (SHOWA:KK), 13. August 1996 (1996-08-13)

## Beschreibung

Die Erfindung bezieht sich auf einen motorisch verstellbaren Fahrzeugsitz nach dem Oberbegriff des Anspruchs 1.

Motorisch verstellbare Fahrzeugsitze der eingangs genannten Art sind aus EP 0 589 421 A bekannt. Insbesondere kommen im Rahmen der Erfindung folgende Verstellmöglichkeiten des Fahrzeugsitzes in Betracht: Höhenverstellung der Hinterkante und/oder der Vorderkante der Sitzfläche, beispielsweise Verstellvorrichtung mit Parallelogrammarmen usw. Aus der US 4,366,983 A und US 4,787,594 A sind Rückenlehnengelenke bekannt, bei denen ein Getriebe zwischen einer äußeren Schale und einem unterem Arm der Rückenlehne angeordnet ist.

Die Erfindung hat es sich zur Aufgabe gemacht, die bekannten Konstruktionen dahingehend weiterzubilden, dass einerseits Gewicht gespart wird, ohne dass damit ein mechanischer Nachteil verbunden wäre und andererseits die Montage des Elektromotors, insbesondere die Lagerung seiner Ausgangswelle präzise zu den anderen Teilen der Verstellvorrichtung erfolgt.

Ausgehend von dem motorisch verstellbaren Fahrzeugsitz der eingangs genannten Art wird diese Aufgabe gelöst durch die Merkmale des Anspruchs 1.

Der lichte Innendurchmesser des Lagers im Sitzseitenteil ist größer als der Außendurchmesser des Ritzels. Damit kann das Ritzel durch das Lager im Sitzseitenteil gesteckt werden, die Lagerung erfolgt zwischen Ritzel und Getriebe. Auf diese Weise kann ein Elektromotor mit bereits vormontiertem Ritzel eingesetzt werden. Die Montage wird dadurch vereinfacht. Weiterhin wird aufgrund des großen Lagers die Genauigkeit der Lagerung verbessert.

Das Getriebegehäuse des Getriebes des Elektromotors kann nun einfach ausgebildet werden, es kann beispielsweise als eine Schale ausgeführt sein. Insbesondere ist es einstückig. Vorzugsweise hat es eine glatte, ebene Abschlußseite, an der es offen ist. Dies ergibt die Möglichkeit, dass das Sitzseitenteil um das Lager herum in dem Teilbereich, der die Abschlußwand des Getriebegehäuses bildet, eben ist.

Insgesamt werden also bevorzugt diejenigen Befestigungsmittel, vorzugsweise Gewindesackbohrungen, im einstückigen, schalenartigen Getriebegehäuse, die normalerweise für die Fixierung eines Deckels des Getriebegehäuses benutzt werden, unmittelbar eingesetzt, um das seitlich offene Getriebegehäuse an dem Sitzseitenteil zu befestigen, das dabei zugleich die Funktion der Abschlußwand des Getriebegehäuses übernimmt.

In einer bevorzugten Weiterbildung ist das Sitzseitenteil mehrteilig ausgeführt. Es hat eine Aufnahmebucht für die nachträgliche Montage einer Querwelle, die die beiden Sitzseiten verbindet und mit Stellarmen an beiden Sitzteilen verbunden ist. Diese Querwelle ist von einem Lagerteil umgriffen, das am Sitzseitenteil befestigt werden kann. Es ist nun möglich, dass dieses Lagerteil, das zum Sitzseitenteil gehört und die Lagerung der Querwelle im Sitzseitenteil bewirkt, zugleich auch die Abschlußwand des Getriebegehäuses ausbildet.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung im folgenden näher erläutert wird. In dieser zeigen:
FIG. 1: einen Sitzbereich eines motorisch einstellbaren Fahrzeugsitzes in Montagedarstellung und
FIG. 2: eine perspektivische Darstellung eines Elektromotors und eines Sitzseitenteils, beide in Montageposition.

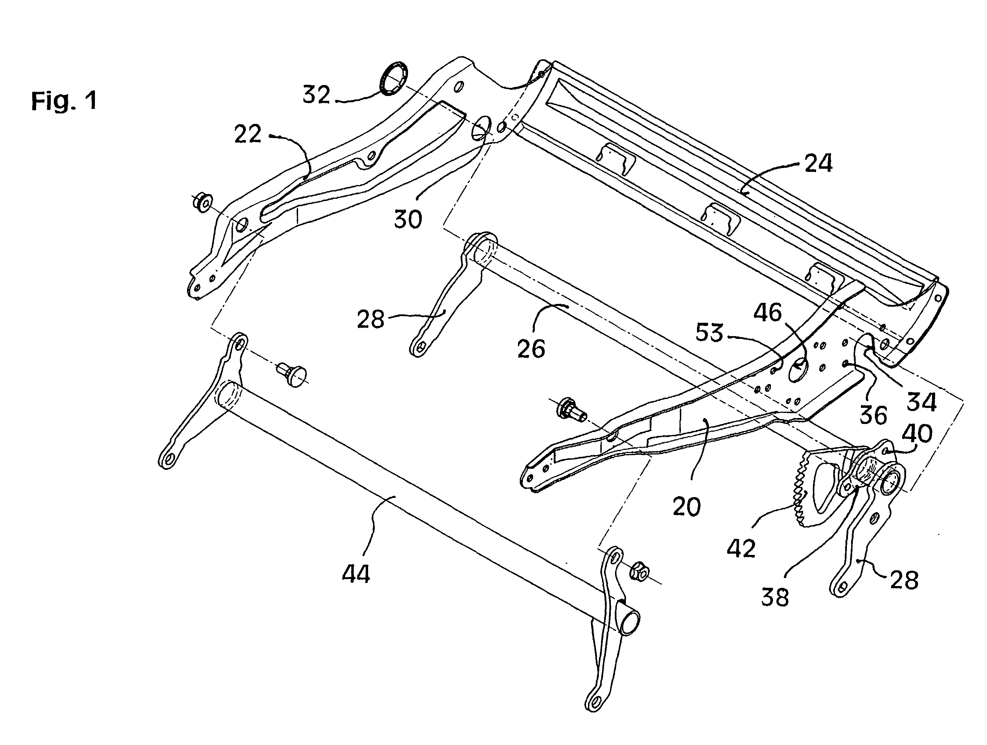

Der Sitz eines motorisch verstellbaren Fahrzeugsitzes ist gemäß Figur 1 durch zwei Sitzseitenteile, im folgenden linkes Seitenteil 20 und rechtes Seitenteil 22 genannt und durch eine rückwärtige Traverse 24, die die beiden Seitenteile 20, 22 in ihrem hinteren Bereich verbindet, im wesentlichen bestimmt.

Es ist eine Querwelle 26 in Form eines Hohlrohres vorgesehen, die an ihren beiden Enden jeweils einen Stellarm 28 aufweist. Für diese Querwelle 26 ist eine Lagerbohrung 30 im rechten Seitenteil 22 vorgesehen. Zur Fixierung dient ein Sicherungsring 32.

Im linken Seitenteil 20 ist dagegen keine entsprechende Lagerbohrung vorgesehen, vielmehr ist dort eine nach unten offene Aufnahmebucht 34 an der der Lagerbohrung 30 des rechten Seitenteils 22 entsprechenden Stelle ausgebildet. Um die Aufnahmebucht 34 herum sind erste Befestigungsmittel 36 vorgesehen.

Die Querwelle 26 wird von einem Lagerteil 38 umgriffen, das den ersten Befestigungsmitteln 36 entsprechende zweite Befestigungsmittel 40 hat. Es kann dadurch am linken Seitenteil 20 montiert werden, es überbrückt dabei die Aufnahmebucht 34. Auf diese Weise kann die Querwelle 26 mit ihren Stellarmen 28, dem Lagerteil 38 und einem Antriebsteil 42, das hier als Zahnsegment ausgebildet ist, nachträglich in einen Sitzträger eingefügt werden, wie er eingangs beschrieben wurde.

Im vorderen Bereich des Sitzes ist eine vordere Schwenkbrücke 44 vorgesehen, die der Höhenverstellung der Sitzvorderkante dient.

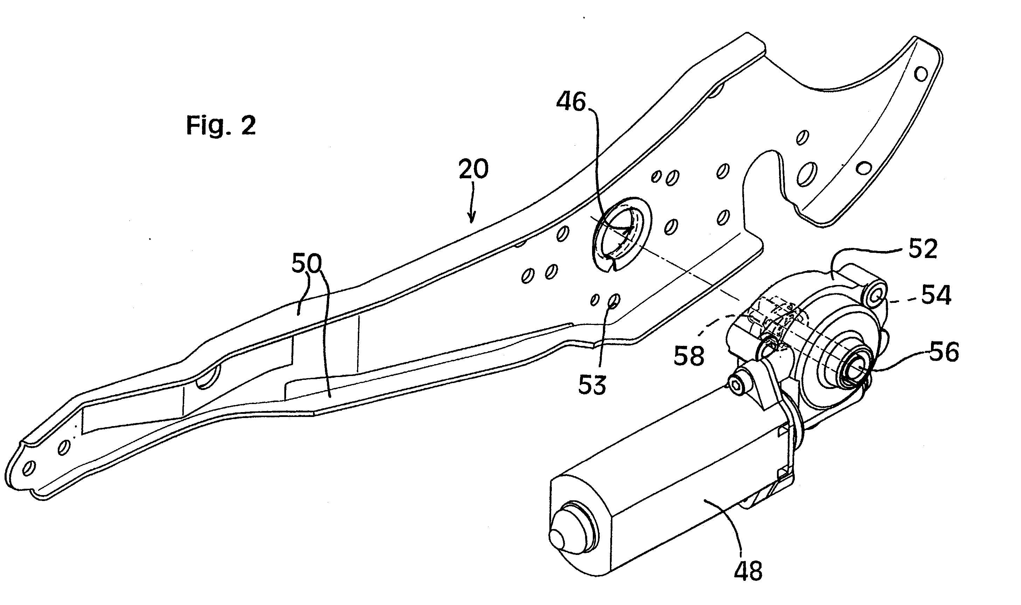

Im linken Seitenteil 20 ist eine Bohrung vorgesehen, die gegenüber der Aufnahmebucht 34 nach vorn versetzt ist. Sie ist, wie Figur 2 zeigt, als Lager 46 ausgeführt. Um dieses Lager herum sind erste Fixierungsmittel 53 angeordnet. Weiterhin hat das Seitenteil 20 einen oberen und einen unteren, quer zu seiner Hauptfläche stehenden Randbereich 50, der nach außen weist.

Es ist ein Elektromotor 48 mit einem Getriebegehäuse 52 vorgesehen. Das Getriebegehäuse ist als Schale ausgeführt, die zum Seitenteil 20 hin offen ist. Dort sind mehrere zweite Fixiermittel 54 in Form von Gewindebohrungen vorgesehen. Sie stimmen mit den ersten Fixiermitteln 53 überein. Das Getriebegehäuse 52 ist so ausgebildet, dass üblicherweise ein Deckel aufgeschraubt werden kann, der Löcher hat, durch die Schrauben greifen, welche dann in die zweiten Fixiermittel 54 eingreifen. Ein derartiger Deckel ist jedoch bei dem Getriebegehäuse 52 nach Figur 2 nicht vorgesehen. Das Getriebegehäuse 52 lagert eine Ausgangswelle 56 des Elektromotors 48 nur auf einer Endseite dieser Ausgangswelle 56. An der anderen Endseite der Ausgangswelle 56 ist ein Ritzel 58 angeordnet. Die Ausgangswelle 56 ist so lang ausgebildet, dass das Ritzel 58 deutlich gegenüber dem Getriebegehäuse, insbesondere seinem vorderen, offenen Rand, vorsteht.

Zwischen Ritzel 58 und der beschriebenen Lagerung der Ausgangswelle 56 befindet sich ein Lagerbereich, der einen Durchmesser hat, der größer ist als derjenige des Ritzels 58. Auch der lichte Durchmesser des Lagers 46 ist größer als der Außendurchmesser des Ritzels 58. Das Ritzel 58 kann damit durch das Lager 46 hindurchgeschoben werden. Das Lager 46 kommt nach dem Durchschieben des Ritzels 58 in Kontakt mit dem beschriebenen Lagerbereich der Ausgangswelle 56. Damit wird die zweite Lagerung der Ausgangswelle 56 unmittelbar im linken Seitenteil 20 erreicht.

Im montierten Zustand der vorgefertigten Querwelleneinheit bestehend aus Querwelle 26, den beiden Stellarmen 28 jeder Seite, dem Lagerteil 38 und dem Antriebsteil 42 befindet sich das Seitenteil 20 zwischen dem Stellarm 28 der linken Seite und dem Antriebsteil 42. Das Ritzel 58 kommt in unmittelbaren Eingriff mit dem Zahnbogen des Antriebsteils 42.

In der Beschreibung sind die Ausdrücke links und rechts sowie vorne und hinten immer in Bezug auf einen Passagier, der sich auf dem Sitz befindet, gewählt worden.

In Abänderung der dargestellten Konstruktion nach den beiden Figuren ist es möglich, das Seitenteil mehrteilig auszubilden. In der Ausbildung, wie oben beschrieben, ist das Seitenteil 20 im wesentlichen einstückig. Es kann nun ein Zusatzteil vorgesehen sein, das beispielsweise durch das Lagerteil 38 gebildet wird und das die Lagerung und/oder den Abschluß der offenen Gehäuseseite des Getriebegehäuses übernimmt. So ist es beispielsweise möglich, das Lagerteil 38 entsprechend größer auszubilden, so dass es zugleich sowohl die Lagerung der Ausgangswelle 56 als auch den Abschluß des Getriebegehäuses 52 bildet. Alternativ kann ein zusätzliches Teil, das dem Seitenteil 20 zugeordnet ist, vorgesehen sein, das auf der dem Elektromotor 48 gegenüberliegenden Seite des linken Seitenteils 20 fixiert wird und ein Lager für die Ritzelspitze ausbildet.

## Patentansprüche

1. Motorisch verstellbarer Fahrzeugsitz mit einstellbarem Sitz, insbesondere höhenverstellbarer Sitzfläche, der ein Sitzseitenteil und einen Elektromotor (48) mit angeflanschtem Getriebe hat, das eine Ausgangswelle (56) und ein Getriebegehäuse (52), welches ein Lagermittel für die Ausgangswelle (56) ausbildet, aufweist, wobei das Getriebegehäuse (52) an seinem dem Lagermittel axial gegenüberliegenden Bereich keine eigene Gehäusewand aufweist, das Getriebegehäuse (52) in diesem Bereich vielmehr am Sitzseitenteil befestigt ist, das insoweit auch die Funktion der fehlenden Gehäusewand des Getriebegehäuses (52) übernimmt und das Getriebegehäuse (52) abschließt und im Sitzseitenteil einstückig oder separat ein Lager (46) für die Ausgangswelle (56) vorgesehen ist, **dadurch gekennzeichnet, dass** an der Ausgangswelle (56) ein Ritzel (58) angeordnet ist und dass der lichte Innendurchmesser des Lagers (46) im Sitzseitenteil größer ist als der Außendurchmesser des Ritzels (58), so dass dieses durch das Lager (46) im Sitzseitenteil gesteckt werden kann.

2. Fahrzeugsitz nach Anspruch 1, **dadurch gekennzeichnet, dass** das Sitzseitenteil um das Lager (46) herum in dem Teilbereich, der den Abschluß des Getriebegehäuses (52) bildet, eben ist.

3. Fahrzeugsitz nach Anspruch 1, **dadurch gekennzeichnet, dass** das Sitzseitenteil um das Lager (46) herum erste Fixierungsmittel, insbesondere Bohrungen, aufweist, die mit entsprechenden zweiten Fixierungsmitteln, insbesondere Gewindebohrungen, im Getriebegehäuse (52) fluchten.

4. Fahrzeugsitz nach Anspruch 1, **dadurch gekennzeichnet, dass** das Sitzseitenteil einen quer zu seiner Hauptfläche stehenden Randbereich (50) hat, der zum Elektromotor (48) hin vorspringt.

5. Fahrzeugsitz nach Anspruch 5, **dadurch gekennzeichnet, dass** sich der Randbereich (50) oberhalb und unterhalb des Elektromotors (48) sowie auf der sitzaußenseitigen Seite des Sitzseitenteils befindet.

6. Fahrzeugsitz nach Anspruch 1, **dadurch gekennzeichnet, dass** sich das Sitzseitenteil zwischen dem Ritzel (58) und dem Elektromotor (48) befindet.

7. Fahrzeugsitz nach Anspruch 1, **dadurch gekennzeichnet, dass** ein separates Lagerstück für die Lagerung der Ausgangswelle (56) im Sitzseitenteil vorgesehen ist, das mit dem Sitzseitenteil verbunden ist.

8. Fahrzeugsitz nach Anspruch 7, **dadurch gekennzeichnet, dass** das Lagerstück einstückig mit einem Lagerteil (38) zusammenhängt, a) in dem eine Querwelle (26) gelagert ist und b) das mit dem Sitzseitenteil verbindbar ist.

## Claims

1. Power adjustable vehicle seat with an adaptable seat, more particularly with a seating that is adjustable in height, that has a seat side part and an electromotor (48) with a flange-mounted transmission which is provided with an output shaft (56) and with a transmission case (52) constituting a bearing means for the output shaft (56), wherein the transmission case (52) has no case wall of its own in its area axially facing the bearing means, the transmission case (52) is fastened in this area at the side part of the seat which also assumes the function of the lacking case wall of the transmission case (52) and shuts the transmission case (52) and the side part of the seat is provided with a bearing (46) for the output shaft (56), said bearing being designed either as an integral part of the side part or as a separate part of it, **characterized in that** a pinion (58) is arranged on the output shaft (56) and that the clear inside diameter of the bearing (46) in the seat side part is bigger than the outside diameter of the pinion (58) so that the pinion may be stuck through the bearing (46) in the seat side part.

2. Vehicle seat according to claim 1, **characterized in that** the seat side part is even in the area around the bearing (46) constituting the edge of the transmission case (52).

3. Vehicle seat according to claim 1, **characterized in that** the seat side part is provided around the bearing (46) with first fastening means, particularly borings, that are aligned with corresponding second fastening means in the transmission case (52), particularly tap holes.

4. Vehicle seat according to claim 1, **characterized in that** the seat side part has a border area (50) placed across its main surface and projecting towards the electromotor (48).

5. Vehicle seat according to claim 5, **characterized in that** the border area (50) is located above and underneath the electromotor (48) as well as on the outer side of the seat side part.

6. Vehicle seat according to claim 1, **characterized in that** the seat side part is located between the pinion (58) and the electromotor (48).

7. Vehicle seat according to claim 1, **characterized in that** for bearing the output shaft (56) a separate bearing piece is provided in the seat side part and is connected to said seat side part.

8. Vehicle seat according to claim 7, **characterized in that** the bearing piece is integral part of a bearing part (38) a) bearing a transverse shaft (26) and b) being connectable to the seat side part.

## Revendications

1. Siège de véhicule réglable par moteur, avec une surface assise réglable, en particulier avec une surface assise réglable en hauteur, lequel présente une partie latérale de siège et un moteur électrique (48) avec une transmission y bridée qui présente un arbre de sortie (56) et un carter de transmission (52) qui forme un moyen de logement pour l'arbre de sortie (56), ledit carter (52) de la transmission ne présentant pas de paroi propre de carter sur sa zone axialement opposée au moyen de logement, plutôt le carter (52) de la transmission étant fixé dans cette zone sur la partie latérale de siège qui, dans cette mesure, assume également la fonction de la paroi inexistante du carter (52) de la transmission et ferme le carter de transmission (52), et un palier (46) destiné à l'arbre de sortie (56) étant prévu dans la partie latérale de siège, ledit palier étant réalisé soit comme partie intégrante de la partie latérale soit comme pièce distincte de celle-ci, **caractérisé par le fait qu'**un pignon (58) est disposé sur l'arbre de sortie (56) et que le diamètre intérieur libre du palier (46) dans la partie latérale de siège est supérieure au diamètre extérieur du pignon (58), de sorte que l'on peut faire passer ce dernier à travers le palier (46) dans la partie latérale de siège.

2. Siège de véhicule selon la revendication 1, **caractérisé par le fait que** la partie latérale de siège se trouvant autour du palier (46) est plane dans la zone partielle qui forme la paroi terminale du carter (52) de la transmission.

3. Siège de véhicule selon la revendication 1, **caractérisé par le fait que** la partie latérale de siège se trouvant autour du palier (46) présente de premiers moyens de fixation, en particulier des perçages, qui sont alignés avec de seconds moyens correspondants de fixation, en particulier des trous taraudés, dans le carter (52) de la transmission.

4. Siège de véhicule selon la revendication 1, **caractérisé par le fait que** la partie latérale de siège présente une zone marginale (50) qui est située transversalement à sa face principale et qui fait saillie en direction du moteur électrique (48).

5. Siège de véhicule selon la revendication 4, **caractérisé par le fait que** la zone marginale (50) est située au-dessus et au-dessous du moteur électrique (48) ainsi que du côté de la partie latérale de siège, qui montre dans la direction opposée au siège.

6. Siège de véhicule selon la revendication 1, **caractérisé par le fait que** la partie latérale de siège est située entre le pignon (58) et le moteur électrique (48).

7. Siège de véhicule selon la revendication 1, **caractérisé par le fait que**, pour loger l'arbre de sortie (56) dans la partie latérale de siège, on prévoit une pièce séparée de support qui est reliée à la partie latérale de siège.

8. Siège de véhicule selon la revendication 7, **caractérisé par le fait que** la pièce de support est réalisée d'une seule pièce avec une partie de logement (38) a) dans laquelle est logé un arbre transversal (26) et b) qui peut être reliée à la partie latérale de siège.
